# EUROPÄISCHE PATENTSCHRIFT

(11) **EP 2 527 144 B1**
(45) Veröffentlichungstag und Bekanntmachung des Hinweises auf die Patenterteilung: **24.12.2014**
(21) Anmeldenummer: 12004015.9
(22) Anmeldetag: 23.05.2012
(51) Int. Cl.: B32B 37/12, B32B 37/06, B30B 5/06, B30B 15/06

(54) **VERFAHREN UND VORRICHTUNG ZUM HEIßVERPRESSEN VON MIT KLEBSTOFF VERSEHENDEN KOMPONENTENSTAPELN ZUR HERSTELLUNG VON SANDWICH-LEICHTBAUPLATTEN MIT INTEGRIERTEM HOLZRAHMENKERN**
METHOD AND DEVICE FOR HOT PRESSING COMPONENT STACKS FITTED WITH ADHESIVE FOR PRODUCING SANDWICH LIGHTWEIGHT BOARDS WITH INTEGRATED WOOD FRAME CORE
PROCÉDÉ ET DISPOSITIF DE COMPRESSION À CHAUD DE PILES DE COMPOSANTS POURVUS DE COLLE POUR LA FABRICATION DE PANNEAUX DE CONSTRUCTION LÉGERS EN SANDWICH AVEC NOYAU À CADRE EN BOIS INTÉGRÉ

(30) Priorität: 25.05.2011 DE 102011103129
(43) Veröffentlichungstag der Anmeldung: 28.11.2012
(73) Patentinhaber: Wemhöner Surface Technologies GmbH & Co. KG, 32052 Herford (DE)
(72) Erfinder: Linhorst, Christian, 33824 Werther (DE); Melies, Hans, 33449 Langenberg (DE)
(74) Vertreter: Rolf, Gudrun

(56) Entgegenhaltungen:
- EP-A2- 0 786 331
- DE-A1-102008 020 976
- DE-A1-102008 061 879
- GB-A- 754 935
- US-A- 4 186 044

## Beschreibung

Die Erfindung betrifft ein Verfahren und eine Vorrichtung zum Heißverpressen von mit Klebstoff wie Leim oder Schmelzkleber versehenden und übereinander zusammengelegten Komponentenstapeln in einer Heißpresse zur Herstellung von einzelnen Sandwich-Leichtbauplatten mit integriertem Holzrahmenkern.

Bei der Herstellung von Leichtbauplatten aus zwei Deck- und mindestens einer Mittellage aus einer Papierwabe, allerdings ohne zusätzlichen Holzrahmenkern ist es bekannt, DE 102007034543 A1, diese zusammengelegten Komponenten in einer Presse miteinander zu verpressen, wozu auch Pressen verwandt werden, deren Presstische großflächig beheizt sind.

Diese Art der Erwärmung der zu verpressenden Komponentenstapel über die Temperatur der Presstische hat den Nachteil, dass stets das gesamte Komponentenvolumen durchwärmt werden muss, um die Kleberschicht zu erreichen und dies auch noch mit der für den Klebstoff optimalen Temperatur, was kaum sicher erzielt werden kann und wozu in der Regel mehrere Minuten Presszeit erforderlich sind. Dies bringt als weiteren Nachteil mit sich, dass Wärmespannungen in den Plattenbauteilen auftreten können, die zu einem Verziehen der fertigen Werkstücke führen können.

Bekannt ist des Weiteren ein automatisches kontinuierliches System zur Herstellung von Glasfaserverbundplatten mit Leichtmetallwabenkern, EP 0 786 331 A2, mit einer Doppelbandpresse mit lichtdurchlässigen Pressbändern und in Durchlaufrichtung ober- und unterhalb der Bänder hintereinander angeordneten Lichtquellen zur Polymerisation eines durch UV-Licht aktivierbaren Klebers, wobei sich dieses Verfahren nicht zur Herstellung von einzelnen, nicht durchsichtigen Sandwich-Leichtbauplatten eignet, zumal die Druckzone und die Aktivierungszone räumlich voneinander getrennt sind. Ein einfacher Austausch von UV-Lichtquellen gegen Mikrowellenquellen würde hier zu keinem funktionieren System führen, da Lichtwellen und elektromagnetische Wellen voneinander abweichende physikalische Eigenschaften aufweisen.

Eine andere bekannte Vorrichtung und Methode zur Herstellung von laminierten Verbundplatten, US 4 186 044, weist eine einzelne Mikrowellenquelle auf, deren Mikrowellen in ein Rohr eingespeist werden, welches mittig gegeneinander verspannbare Pressplatten aufweist, zwischen denen zu verpressende Komponenten quer zur Längsrichtung des Rohres zwischen umlaufenden Doppelbändern kontinuierlich hindurch gefördert werden. Weder erlaubt diese Vorrichtung die Herstellung einzelner Platten noch die Variation der Heizleistung über die sehr kurze wirksame Länge der Pressplatten. Zudem erfordert die Gleitreibung zwischen den Bändern und den Pressplatten starke Antriebskräfte und bedingt zudem einen großen Verschleiß.

Aufgabe der Erfindung ist es, ein Verfahren und eine Vorrichtung zum Heißverpressen von Komponentenstapeln zur Herstellung von Sandwich-Leichtbauplatten mit integriertem Holzrahmenkernen zur Verfügung zu stellen, welche bei optimierten Energieeinsatz eine deutliche Beschleunigung und Verbesserung des Fertigungsverfahrens erlauben und die Gefahr von auftretenden Wärmespannungen und Bauteilverzug vollständig ausschließen.

Die Lösung dieser Aufgabe gelingt im Zusammenspiel der technischen Merkmale der Oberbegriffe der Ansprüche 1 und 4 mit deren kennzeichnenden Merkmalen. Das erfindungsgemäße Verfahren zeichnetet sich dabei im Wesentlichen dadurch aus, dass eine Erwärmung und eine Verpressung mehrerer Komponentenstapel kontinuierlich im Durchlaufverfahren und die Erwärmung der Leimfugen durch eine von den Oberseiten und/ oder den Unterseiten der Komponentenstapel her einstrahlende Mikrowellenheizung erfolgt, bevorzugt aber gleichzeitig von beiden Seiten her.

Diese Art der Erwärmung hat den wesentlichen Vorteil, dass nicht das gesamte Volumen der zu verpressenden Komponentenstapel erwärmt werden muss, sondern dass bevorzugt nur die sehr viel Feuchtigkeit enthaltende Kleberschicht erwärmt wird, so dass sich zum einen die Prozessdauer drastisch reduziert und zum anderen in den Bauteilen keine Wärmespannungen erzeugt werden, da diese nicht oder auf Grund ihres geringen Wasseranteils nur wenig erwärmt werden. Die Art der Wärmeerzeugung ist des Weiteren zum einen sehr wirtschaftlich und gezielt einsetzbar und zum anderen lässt sie sich, beispielsweise bei einem Produktionsstillstand, schnell und wirksam verringern, sodass die Erzeugung von Ausschuss durch überhitzte Kleber oder Bauteile vollkommen ausgeschlossen werden kann.

Weitere vorteilhafte Ausgestaltungen des erfinderischen Verfahrens ergeben sich mit und in Kombination aus den nachfolgenden Unteransprüchen.

Die Erwärmung der Komponentenstapel erfolgt unmittelbar in der Heizpresse und zwar zwischen quer zur Durchlaufrichtung in Durchlaufrichtung voneinander beabstandeten Pressschuhen oder Pressbändern einer Doppelbandpresse ebenfalls durch Mikrowellenheizungen, wodurch sich der Herstellungsprozess noch besser auf die einzelnen zu verbindenden Komponenten abstimmen lässt, sei es durch unterschiedliche Druckaufbringung in unterschiedlichen Verfahrensstadien und Temperaturbereichen oder in Abhängigkeit der zu verarbeitenden Komponenten bzw. deren Werkstückdicken.

Die Mikrowellenheizungen bestehen aus mehreren in Querreihen hintereinander angeordneten Strahlungsquellen, so dass über die Durchlauflänge und aber auch über die Durchlauffläche beispielsweise abnehmende Verarbeitungstemperaturen eingestellt werden können oder der spezifische Druck auf die Möbelbauteile während der Erwärmung aufgebaut und gehalten werden kann. Eine solche gezielte Beeinflussung der Wärmeinbringung in zu verpressenden Komponentenstapel liefert einen enormen Vorteil gegenüber bekannten und nur träge zu steuernden Heizpressen, ebenso wie bei der erzielbaren Qualität der hergestellten Produkte.

Ein weiterer Vorteil des erfinderischen Verfahrens besteht in der beliebigen Reihenfolge von unterschiedlich groß- oder kleinformatigen Komponentenstapeln, da diese kontinuierlich verarbeitet werden und deswegen wenig Rücksicht auf die unterschiedlichen Längen- und Breitenabmessungen genommen werden muss.

Dies trifft insbesondere für eine besonders vorteilhafte Ausgestaltung der Erfindung zu, bei der mindestens ein Pressband als Gliederband aus einzelnen Platten aus mikrowellendurchlässigem Material ausgebildet ist, die bevorzugt als biegesteife Stegverbundplatten ausgeführt sind und die zudem die Breite des Pressbandes und in Durchlaufrichtung eine Länge aufweisen, die größer ist, als die Achsabstände zwischen drei aufeinanderfolgenden Drehachsen der die Platten unterstützenden Rollen, wodurch sichergestellt werden kann, dass auch kleine Werkstückstapel kippfrei zwischen den Platten hindurch transportiert werden können, ohne mit seitlichen Schubkräften belastet zu werden, welche die einzelnen Schichten eines Werkstückstapels seitlich verschieben könnten.

Die Kontaktflächen der Pressschuhe sind hierbei als Rollentische ausgebildet, die in mehreren Reihen und Spalten seitlich gegeneinander versetzt angeordnete Rollen besitzen, wobei die Mikrowellenheizungen auf Freiräume zwischen benachbarte Rollen gerichtet und die Freiräume sich gegenüberliegender oberer und unterer Rollentische deckungsgleich angeordnet sind.

Entsprechend einer weiteren besonderen Ausgestaltung der Erfindung ist einem rollenfreien Freiraum mit Mikrowellenheizung der einen Seite, dem ein rollen- und mikrowellenheizungsfreier Freiraum auf der anderen Seite gegenüberliegt, ein in diesem rollen- und mikrowellenheizungsfreien Freiraum angeordneter Hohlleiter als Umlenkung für die Mikrowellenstrahlung zugeordnet. Dadurch wird es möglich, die Mikrowellenstrahlung nicht durch Lücken zwischen zwei aufeinanderfolgende Komponentenstapel ungehindert hindurch strahlen zu lassen, die dem Bedienpersonal gefährlich werden könnten, sondern die Mikrowellenstrahlung auf unmittelbar davor oder dahinter befindliche Komponentenstapel oder aber in einen Absorber umzuleiten, der unter einem solchen Freiraum angeordnet sein kann, um die freie Strahlung zu absorbieren.

Weiterhin ist von Vorteil, dass der verwendete wasserlösliche Leim unabhängig von möglicherweise bereits in Komponenten der Komponentenstapel verarbeiteten Schmelzklebern gezielt auf eine optimale Arbeitstemperatur erhitzt werden kann, so dass eine unerwünschte Erwärmung von Schmelzklebern mit der Gefahr der Aufweichung oder Zerlegung solcher vorgefertigter Schichtkomponenten sicher ausgeschlossen werden kann.

Nachfolgend werden das Verfahren und die erfinderische Vorrichtung zur Durchführung des Verfahrens anhand von Zeichnungen näher beschrieben. Es zeigen:
- Fig. 1: eine kombinierte Heizpresse aus Mikrowellenheizung und Pressschuhen,
- Fig. 2: einen zu verpressenden Komponentenstapel in teilweise geschnittener Ansicht,
- Fig. 3: einen vergrößerten Querschnitt durch einen zu verpressenden Komponentenstapel im Schnitt.

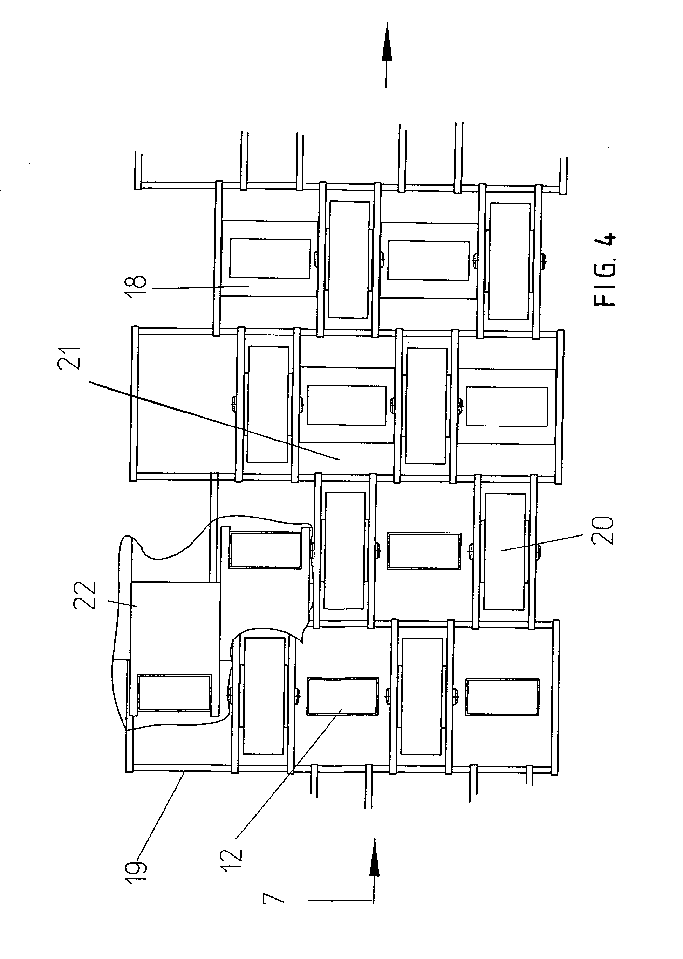

- Fig. 4: eine Draufsicht auf einen Rollentisch einer dritten Variante und
- Fig. 5: eine Seitenteilansicht auf eine Vorrichtung mit Rollentischen gem. Fig. 4.

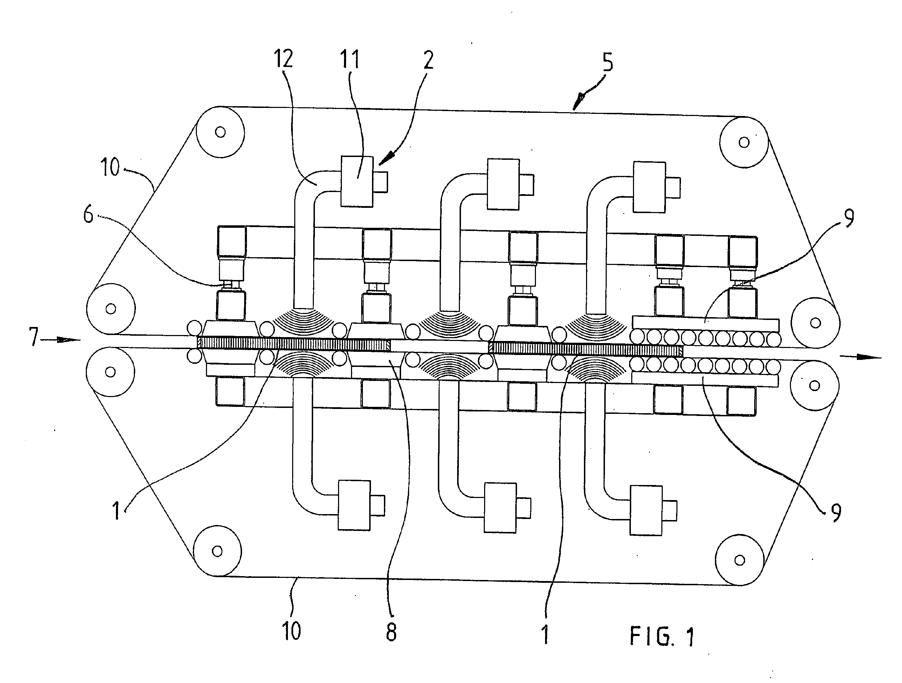

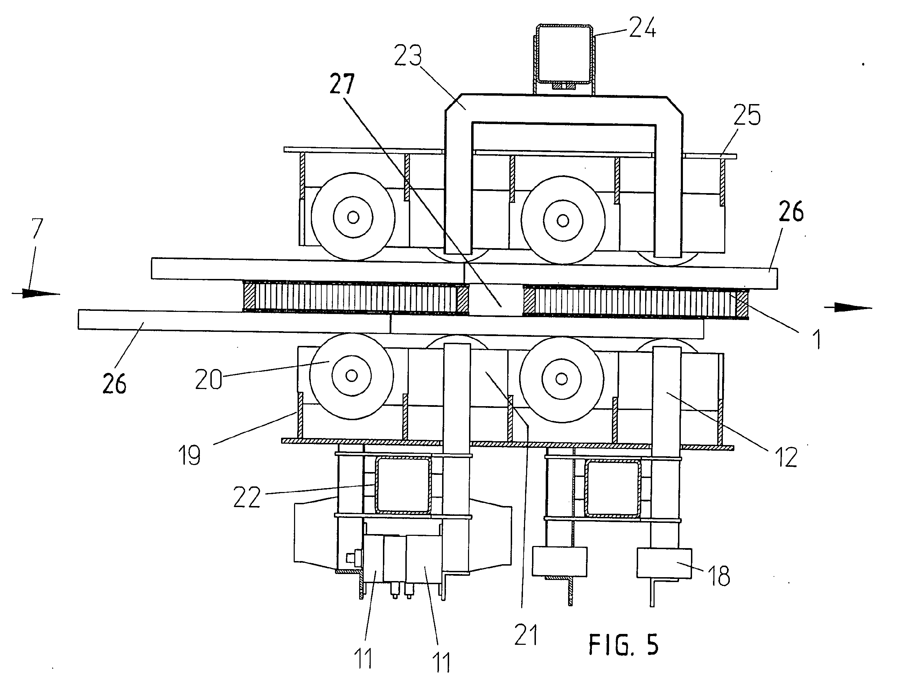

Die Vorrichtung zur Durchführung des Verfahrens besteht aus einer kombinierten Heizpresse 5, die als Doppelbandpresse ausgeführt ist, wie dies in den Figuren 1 und 5 gezeigt ist. Die Erwärmung durch die Mikrowellenheizung 2 erfolgt zumindest von einer Ober- oder Unterseite, bevorzugt aber gleichzeitig von beiden Seiten der Komponentenstapel 1 her, wozu die Pressbänder 10 aus mikrowellendurchlässigen Material gefertigt sind.

Die Mikrowellenheizung 2 selber besteht aus mehreren neben und in Durchlaufrichtung 7 hintereinander angeordneten Strahlungsquellen, wobei jede Strahlungsquelle aus einem von einem Pressbereich entfernten Magnetron 11 und einem die Strahlung zum Komponentenstapel 1 transportierenden abgeschirmten Hohlleiter 12 besteht. Die Pressen 3;5 sind mit einzelnen Pressschuhen 8,9 ausgestattet, die über Druckzylinder 6 Pressdruck auf die Komponentenstapel 1 aufbringen können und die vorzugsweise plane und leicht gleitende Kontaktflächen mit dem Pressband 10 aufweisen oder aber als Rollenbalken oder Rollenfläche ausgebildet sind, so dass Gleitreibung zwischen Pressband 10 und den Pressschuhen 9 vollkommen ausgeschaltet ist.

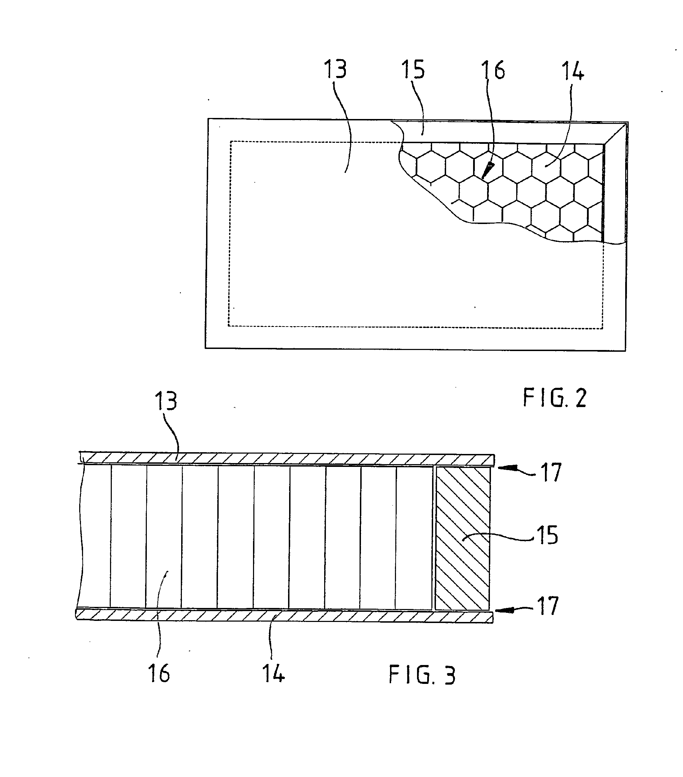

Wie in den Fig. 2 und 3 dargestellt, bestehen die heiß zu verpressenden Komponentenstapel 1 aus einer unteren Deckelplatte 14, einer oberen Deckelplatte 13, einem innerhalb deren Außenkontur umlaufenden Holzrahmen 15 und den Innenraum ausfüllenden Stützmaterial, etwa Papierwaben 16, wie dies aus Fig. 3 ersichtlich wird. Zwischen den Deckelpatten 13;14 und dem Holzrahmen 15 und der Papierwabe 16 befinden sich die Klebstoffschichten 17, die bevorzugt aus herkömmlichem wasserlöslichen Leim bestehen.

Von den Pressbändern 10 sind, wie in der Fig. 5 dargestellt, beide als Gliederbänder aus einzelnen Platten 26 aus mikrowellendurchlässigem Material, insbesondere aus nicht bipolarem Kunststoff, etwa aus einem Verbund ausgebildet. Die Platten 26 sind dabei als biegesteife Stegverbundplatten ausgeführt und weisen die Breite der Pressbänder 10 und in Durchlaufrichtung 7 eine Länge auf, die größer ist, als die Achsabstände zwischen drei aufeinanderfolgenden Drehachsen der sie abstützenden Rollen 20 betragen, sodass ein Kippeln der Platten 26 auf oder unter den Rollen 26 und damit der Komponentenstapel 1 vollständig ausgeschlossen ist.

Die Kontaktflächen dieser als Rollentische 19;25 ausgebildeten Pressschuhe 8;9 der in den Figuren 5 und 6 dargestellten Variante der Vorrichtung besitzen in mehreren Reihen und Spalten seitlich gegeneinander versetzt angeordnete Rollen 20, wobei die Mikrowellenheizungen 2 auf die Freiräume 21 zwischen den benachbarte Rollen 20 gerichtet sind und die Freiräume 21 der sich gegenüberliegenden oberen und unteren Rollentische 19;25 in der Regel deckungsgleich angeordnet sind.

Einem rollenfreien Freiraum 21 mit Mikrowellenheizung 2 der einen Seite kann jedoch auch ein rollen- und mikrowellenheizungsfreier Freiraum 21 auf der anderen Seite gegenüberliegen, wie dieses in Figur 6 gezeigt ist, der einen Hohlleiter 12 als Umlenkung 23 für die Mikrowellenstrahlung entweder in einen in Transportrichtung der Komponentenstapel 1 davor oder dahinterliegenden Freiraum 21 aufweist, sodass die Mikrowellenstrahlung durch Lücken 27 zwischen benachbarten Komponentenstapeln 1 auf diese umleitbar ist oder zu einem unter dem Freiraum 21 angeordneten Absorber 18, von dem die freie Mikrowellenstrahlung absorbiert werden kann.

## Patentansprüche

1. Verfahren zum Heißverpressen von mit Klebstoff versehenden und zusammengelegten Komponentenstapeln zur Herstellung von einzelnen Sandwich-Leichtbauplatten mit Holzrahmenkern, wobei eine Erwärmung und eine Verpressung mehrerer Komponentenstapel (1) kontinuierlich im Durchlaufverfahren und die Erwärmung der Leimfugen (17) durch eine von den Oberseiten und/ oder den Unterseiten der Komponentenstapel (1) her einstrahlende Mikrowellenheizung (2) erfolgt, wobei die Mikrowellenheizung (2) aus mehreren in Querreihen hintereinander angeordneten Strahlungsquellen besteht, die über eine Durchlauflänge und/ oder Durchlauffläche mit unterschiedlichen oder gleichen Heizleistungen betrieben werden können und die Heißpresse (5) Pressschuhe (9) besitzt und Kontaktflächen der Pressschuhe (9) als Rollentische (19;25) ausgebildet sind, die in mehreren Reihen und Spalten seitlich gegeneinander versetzt angeordnete Rollen (20) besitzen und die Mikrowellenheizungen (2) auf Freiräume (21) zwischen benachbarte Rollen (20) gerichtet sind und die Erwärmung durch die Mikrowellenheizung (2) zwischen quer zur Durchlaufrichtung (7) in Durchlaufrichtung (7) voneinander beabstandeten Pressschuhen (9) der Heißpresse (5) erfolgt.

2. Verfahren nach Anspruch 1, **dadurch gekennzeichnet, dass** wahlfrei beliebig groß- oder kleinformatige Komponentenstapel (1) in beliebiger Reihenfolge heißverpresst werden.

3. Verfahren nach einem der vorgenannten Ansprüche, **dadurch gekennzeichnet, dass** die Mikrowellenheizung (2) gezielt wasserlöslichen Leim auf eine optimale Arbeitstemperatur erhitzt.

4. Vorrichtung zur Durchführung des Verfahrens nach einem der vorgenannten Ansprüche, wobei die Heizpresse (5) als Doppelbandpresse ausgebildet ist und die Pressbänder (10) aus mikrowellendurchlässigem Material bestehen, die Heizpresse (5) Pressschuhe (9) besitzt, deren Kontaktflächen als Rollentische (19;25) ausgebildet sind, die in mehreren Reihen und Spalten seitlich gegeneinander versetzt angeordnete Rollen (20) besitzen und wobei die Mikrowellenheizungen (2) auf Freiräume (21) zwischen benachbarte Rollen (20) gerichtet sind.

5. Vorrichtung nach Anspruch 4, **dadurch gekennzeichnet, dass** mindestens ein Pressband (10) als Gliederband aus einzelnen Platten (26) aus mikrowellendurchlässigem Material ausgebildet ist.

6. Vorrichtung nach Anspruch 5, **dadurch gekennzeichnet, dass** die Platten (26) als biegesteife Stegverbundplatten ausgeführt sind.

7. Vorrichtung nach Anspruch 5, **dadurch gekennzeichnet, dass** die Platten (26) die Breite des als Gliederband ausgebildeten Pressbandes (10) und in Durchlaufrichtung (7) eine Länge aufweisen, die größer ist, als ein Achsabstand zwischen drei aufeinanderfolgenden Drehachsen der Rollen (20).

8. Vorrichtung nach einem der vorgenannten Ansprüche 4-7, **dadurch gekennzeichnet, dass** die Mikrowellenheizung (2) aus mehreren neben- und in Durchlaufrichtung (7) hintereinander angeordneten Strahlungsquellen und jede Strahlungsquelle aus einem von einem Pressbereich entfernten Magnetron (11) und einem die Strahlung zum Komponentenstapel (1) transportierenden abgeschirmten Hohlleiter (12) besteht.

9. Vorrichtung nach einem der vorgenannten Ansprüche 4-8, **dadurch gekennzeichnet, dass** die Pressschuhe (9) plane, leicht gleitende Kontaktflächen mit den Pressbändern (10) aufweisen oder als Rollenbalken ausgebildet sind.

10. Vorrichtung nach einem der vorgenannten Ansprüche 4-9, **dadurch gekennzeichnet, dass** die Freiräume (21) sich gegenüberliegender oberer und unterer Rollentische (19;25) deckungsgleich angeordnet sind und einem rollenfreien Freiraum (21) mit Mikrowellenheizung (2) der einen Seite ein rollen- und mikrowellenheizungsfreier Freiraum (21) auf der anderen Seite gegenüberliegt, der einen Hohlleiter (12) als Umlenkung (23) für die Mikrowellenstrahlung entweder in einen in Transportrichtung der Komponentenstapel (1) davor oder dahinterliegenden Freiraum (21) aufweist, sodass die Mikrowellenstrahlung durch Lücken (27) zwischen benachbarten Komponentenstapeln (1) auf diese umleitbar ist oder unter einem Freiraum (21) ein Absorber (18) angeordnet ist, mittels dem freie Strahlung absorbierbar ist.

## Claims

1. Method for hot pressing component stacks provided with adhesive and laid together to produce individual lightweight sandwich boards with a wood frame core, wherein heating and pressing of a plurality of component stacks (1) is carried out continuously in the continuous-passage process and the heating of the glued joints (17) is carried out by means of a microwave heater (2) irradiating from the upper sides and/or the undersides of the component stacks (1), wherein the microwave heater (2) comprises a plurality of radiation sources arranged one after another in transverse rows, which can be operated with different or identical heating outputs over a passage length and/or passage area, and the hot press (5) has press shoes (9), and contact faces of the press shoes (9) are formed as roller tables (19; 25), which have rollers (20) arranged offset laterally with respect to one another in a plurality of rows and columns, and the microwave heaters (2) are aimed at free spaces (21) between adjacent rollers (20), and the heating is carried out by the microwave heater (2) between press shoes (9) of the hot press (5) which are spaced apart from one another in the direction of travel (7), transversely with respect to the direction of travel (7).

2. Method according to Claim 1, **characterized in that** optionally any desired large- or small-format component stacks (1) are hot pressed in any desired order.

3. Method according to one of the preceding claims, **characterized in that** the microwave heater (2) specifically heats water-soluble glue to an optimal working temperature.

4. Device for carrying out the method according to one of the preceding claims, wherein the hot press (5) is constructed as a double-belt press and the press belts (10) consist of microwave-permeable material, the hot press (5) has press shoes (9), the contact faces of which are formed as roller tables (19; 25), which have rollers (20) arranged offset laterally with respect to one another in a plurality of rows and columns, and wherein the microwave heaters (2) are aimed at free spaces (21) between adjacent rollers (20).

5. Device according to Claim 4, **characterized in that** at least one press belt (10) is constructed as a link belt made of individual plates (26) of microwave-permeable material.

6. Device according to Claim 5, **characterized in that** the plates (26) are implemented as flexurally rigid composite web plates.

7. Device according to Claim 5, **characterized in that** the plates (26) have the width of the press belt (10) formed as a link belt and a length in the direction of travel (7) which is greater than an axial spacing between three successive axes of rotation of the rollers (20).

8. Device according to one of the preceding Claims 4-7, **characterized in that** the microwave heater (2) comprises a plurality of radiation sources arranged beside one another and one after another in the direction of travel (7), and each radiation source comprises a magnetron (11) remote from a pressing area and a shielded waveguide (12) transporting the radiation to the component stack (1).

9. Device according to one of the preceding Claims 4-8, **characterized in that** the press shoes (9) have planar, easily sliding contact faces with the press belts (10) or are formed as roller bars.

10. Device according to one of the preceding Claims 4-9, **characterized in that** the free spaces (21) of opposite upper and lower roller tables (19; 25) are arranged congruently, and a roller-free free space (21) with microwave heater (2) on one side is located opposite a roller-free and microwave heater-free free space (21) on the other side, which has a waveguide (12) as deflecting means (23) for the microwave radiation in a free space (21) located either upstream or downstream in the transport direction of the component stacks (1), so that the microwave radiation can be diverted to adjacent component stacks (1) through gaps (27) between the same, or an absorber (18), by means of which free radiation can be absorbed, is arranged under a free space (21).

## Revendications

1. Procédé de compression à chaud de piles de composants dotées d'adhésif et rassemblées, en vue de fabriquer différentes plaques sandwich à structure légère dotées d'une âme d'encadrement en bois, le chauffage et la compression de plusieurs piles (1) de composants s'effectuant en continu dans un procédé continu et le chauffage des joints de colle (17) s'effectuant par chauffage (2) à microondes rayonnant depuis le côté supérieur et/ou le côté inférieur de la pile (1) de composants, le chauffage (2) par microondes étant constitué de plusieurs sources de rayonnement qui sont disposées les unes derrière les autres en rangées transversales et qui peuvent être utilisées à différentes puissances de chauffage ou les mêmes puissances de chauffage au-dessus d'une longueur de passage et/ou d'une surface de passage, la presse à chaud (5) possédant des sabots de compression (9) et des surfaces de contact des sabots de compression (9) étant configurées comme tables (19; 25) à rouleaux qui possèdent des rouleaux (20) disposés en décalage mutuel sur plusieurs rangées et plusieurs colonnes, les chauffages (2) à microondes étant orientés sur des espaces libres (21) disposés entre des rouleaux (20) voisins et le chauffage étant réalisé par le chauffage (2) à microondes entre des sabots de compression (9) de la presse à chaud (5) disposés à distance mutuelle dans la direction de passage (7), transversalement par rapport à la direction de passage (7).

2. Procédé selon la revendication 1, **caractérisé en ce que** des piles (1) de composants de grand ou de petit format sélectionnés librement sont compressées à chaud en succession quelconque.

3. Procédé selon l'une des revendications précédentes, **caractérisé en ce que** le chauffage (2) à microondes chauffe de manière contrôlée à une température de travail optimale de la colle soluble dans l'eau.

4. Dispositif en vue de la mise en oeuvre du procédé selon l'une des revendications précédentes, dans lequel la presse à chaud (5) est configurée comme presse à double bande et les bandes (10) de presse sont constituées d'un matériau transparent vis-à-vis des microondes, la presse à chaud (5) possédant des sabots de compression (9) dont les surfaces de contact sont configurées comme tables (19; 25) à rouleaux qui possèdent des rouleaux (20) disposés en décalage latéral mutuel sur plusieurs rangées et plusieurs colonnes, les chauffages (2) à microondes étant orientés vers des espaces libres (21) situés entre des rouleaux (20) voisins.

5. Dispositif selon la revendication 4, **caractérisé en ce qu'**au moins une bande de compression (10) est configurée comme bande formée de différentes plaques (26) en matériau transparent vis-à-vis des microondes.

6. Dispositif selon la revendication 5, **caractérisé en ce que** les plaques (26) sont configurées sous la forme de plaques composites à nervures, rigides en flexion.

7. Dispositif selon la revendication 5, **caractérisé en ce que** les plaques (26) présentent la largeur de la bande de compression (10) configurée comme bande à éléments et présentent des rouleaux (20) le long de trois axes de rotation successifs dans la direction de passage (7).

8. Dispositif selon l'une des revendications 4 à 7 qui précèdent, **caractérisé en ce que** le chauffage (2) à microondes est constitué de plusieurs sources de rayonnement disposées les unes derrière les autres dans la direction latérale et la direction de passage (7) et **en ce que** chaque source de rayonnement est constituée d'un magnétron (11) disposé à distance d'une zone de compression et d'un conducteur creux (12) blindé qui transporte le rayonnement vers la pile (1) de composants.

9. Dispositif selon l'une des revendications 4 à 8 qui précèdent, **caractérisé en ce que** les sabots de compression (9) présentent des surfaces de contact avec les bandes de compression (10) qui sont planes et glissantes ou sont configurés comme barreaux à rouleaux.

10. Dispositif selon l'une des revendications 4 à 9 qui précèdent, **caractérisé en ce que** les espaces libres (21) sont disposés de manière à recouvrir exactement une table à rouleaux supérieure et une table à rouleaux inférieure (19; 25) opposées l'une à l'autre et **en ce qu'**un espace libre (21) exempt de rouleaux et de chauffages à microondes situé sur un côté et situé face à un espace libre (21) exempt de rouleaux doté d'un chauffage (2) à microondes situé sur un côté, l'espace libre présentant un conducteur creux (12) configuré comme renvoi (23) pour le rayonnement de microondes dans un espace libre (21) situé en avant ou en arrière de la pile (1) de composants dans la direction de transport, de telle sorte que le rayonnement des microondes puisse être dévié sur les piles (1) de composants par des interstices (27) situés entre des piles de composants voisins ou **en ce qu'**un absorbeur (18) au moyen duquel le rayonnement libre peut être absorbé est disposé en dessou.
